# EUROPEAN PATENT APPLICATION

(11) **EP 4 497 912 A1**
(43) Date of publication of application: **29.01.2025**
(21) Application number: 22933222.6
(22) Date of filing: 08.11.2022
(51) Int. Cl.: F01D 1/34

(54) **TURBINE DRIVEN BY OF HYDROGEN OR A HYDROCARBON AND VACUUM BY AQUEOUS PRECIPITATION**

(30) Priority: 23.03.2022 ES 202230254
(71) Applicant: Bendito Vallori, Sebastián Enrique, 07300 Inca Islas Baleares (ES)
(72) Inventor: Bendito Vallori, Sebastián Enrique, 07300 Inca Islas Baleares (ES)
(74) Representative: Garavelli, Paolo
(86) International application number: PCT/ES2022/070714
(87) International publication number: WO 2023/180591

(57) **Abstract**

Engine consisting of a turbine driven by confrontation of explosions and vacuum on both sides of its blades; deflagrations caused by the reaction of oxygen and hydrogen under pressure, or any hydrogenated hydrocarbon and the first mentioned gas, and the shrinkage derived from the precipitation of water vapor obtained from said combinations by means of the aqueous spraying thereof with liquid water.

## Description

Engine that is capable of obtaining its rotary power from the use of a succession of explosions, either by injection of hydrogenated hydrocarbon fluid or pure hydrogen under pressure, in combination with oxygen at equal value, executed on one of the faces of a turbine and obtaining a depression, in front of the other face of said rotating element, by precipitation of the water vapor resulting from the previous chemical reaction, by spraying it with liquid water; method, which constitutes an evolution of part of the mechanism of the hydraulic transmission system with developments by electromagnetic control for vehicles, with discretionary electric generation and propulsion, under application number P202130350, so both partially coincide in their constitutive structure as shown. you will see.

The device proposed here is a high-performance turbine with a great reduction in carbon emissions into the atmosphere, in case of burning a hydrocarbon fluid, or completely eliminating such waste if it is done with pure hydrogen; In addition, by never consuming atmospheric air, the production of polluting residues derived from the nitrogen that is part of said gas mixture is avoided, which means obtaining an optimal motive source capable of relieving nature of much or all of the damage it causes. our mobility entails it.

According to the previous research carried out, the device claimed here does not currently exist, so I request that you grant me the rights corresponding to the device that is described below in a practical case of industrial application, which is reinforced in its understanding with a series of schematic figures that represent it; In all of them, the lines with a dash followed by a dot indicate the hollowness of the space on which they are drawn and those with a discontinuous line indicate that the part thus reflected is hidden in that view.

For explanatory purposes, the device collected here is made up of three elements, connected in line by separate conduits whose respective links are sealed with the outside:
One injector, which we call that.

Another, called rotor, which is basically the same as those claimed as a driving device and wheel in the patent cited above, as will be seen throughout the explanation.

A vacuum cleaner, hereinafter known as.

In addition, it has an electrical circuit; which, like said patent, also integrates a battery that now powers a series of pressure gauges, another of aqueous levels and a revolution counter based on whose data it controls a series of solenoid valves and a spark plug, as will be explained.

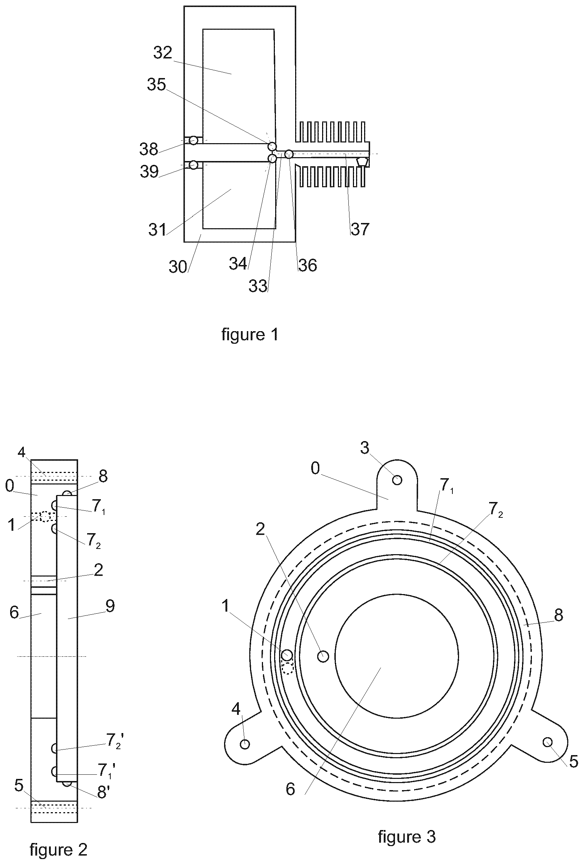

Figure 1 shows the profile of a rigid, compact, pressure and temperature resistant element, which is designated with the number 30; We know it as an impeller and in it (30) the following are opened:
Under logo 31, a pressurized oxygen tank which (31) has a spherical opening reflected with the number 34.

The oxygen tank (31) communicates with the outside, for eventual recharging, through a cylindrical conduit that has a spherical cavity in its middle part; We call this step oxygen loading and it is detailed with the number 39.

Marked as 32, there appears a tank that we call fuel that contains hydrogen at its discretion at the same pressure as the oxygen already detailed or hydrocarbon fluid with hydrogen injected at the same intensity.

The fuel tank (32) communicates with the outside, for eventual recharging, through a cylindrical conduit that has a spherical cavity in its middle part; We call this step fuel loading and it is detailed with the number 40.

Said tank (32) has a spherical opening reflected with the number 35.

The spherical opening of the oxygen tank (34), and that of the fuel tank (35), communicate with the chamber that we call the mixture, which is shown under anagram 33.

The number 37 indicates the combustion chamber of the material coming from the mixing chamber (33); The external walls of the combustion chamber (37) are suitable for radiating a large amount of heat to the surrounding medium.

The combustion chamber (37) has a cylindrical cavity marked with the number 36 and another hexagonal one detailed with the number 40.

Figure 2 shows the top view of the diametrically horizontal section of a container, which is similar in its geometric constitution to those of the hydraulic transmission system mentioned above, which we generically call casing; It includes, with the anagram 0, a rigid, dense cylindrical container resistant to high temperature and pressure; Its geometry is characterized by having:
Three equal protuberances, of which only two hidden views appear here, pierced by separate threaded cylindrical holes generically called hitch, under the respective designation 4 and 5.

A coaxial hole that passes through its center into the cylindrical body of the same (0), marked with the number 6, which we will generically call the casing track.

A cylindrical concavity, generally called a sinus, opens in one of the bases of the casing, which is shown with notation 9.

A cylindrical conduit that has an open spherical opening, represented under the sign 1 and which we generically call passage, communicates in a biased manner to the sinus (9) with the opposite base of the casing (0), hence its hidden representation..

A cylindrical conduit, represented under the sign 2, which we generically call a counter, communicates perpendicularly to the sinus (9) with the opposite base of the casing (0).

The following semitoroidal ducts are reflected, open to different diameters on the circular surface of the sinus (9):
With the anagrams 7₁ and 7₁', the upper and lower slopes respectively of the channel that we generally know as a major static joint.

With the anagrams 7₂ and 7₂', the upper and lower slopes respectively of the channel generically called minor static joint.

A semitoroidal channel, which we will generally call a bearing, is indicated respectively with the symbols 8 and 8' in its lower and upper openings of the side wall of the sinus (9) in which it is made.

Figure 3 is the elevation drawing of a casing seen from the right side of the previous representation, of which it repeats the terminology, adding an upper protuberance, equal to the previous ones and also crossed by a new hitch, now with designation 3.

Figure 4 shows an elevation view of a rigid, compact cylindrical piece resistant to high temperature and pressure detailed with the number 10, which we will call the driving rotor.

The same (10) is identical to its analogue in the transmission system patent, unlike the fact that here it only has one turbine with its two isolation channels and not three with their respective sealing means as it does in that patent.

We can see, hidden in this view and with the number 11, a semitoroidal groove made on the side of the drive rotor (10), which we generically call the drive bearing.

The bases seen here of the drive rotor (10) open two semitoroidal concavities which we will designate and know generically as:
With the anagram 12, the major drive joint channel.

With the anagram 13, the minor drive joint channel.

The dimensions of both (12 and 13) coincide respectively with those of the larger (7₁) and smaller (7₂) static seal channels.

A central hexagonal channel, which we will call the power intake reflected with the number 16, communicates orthogonally in a coaxial manner both bases of the drive rotor (10).

The drive rotor (10) is passed from base to base obliquely through a concentric series of holes, whose separating blades we will know as the motor turbine; of which we can see its upper openings identified with the anagram 14₁, lower openings with the number 14₂ and the right quadrangular with the number 14₃.

A cylindrical hole that perpendicularly communicates the two bases of the drive rotor (10), which we call the drive counter, is indicated with the sign 15.

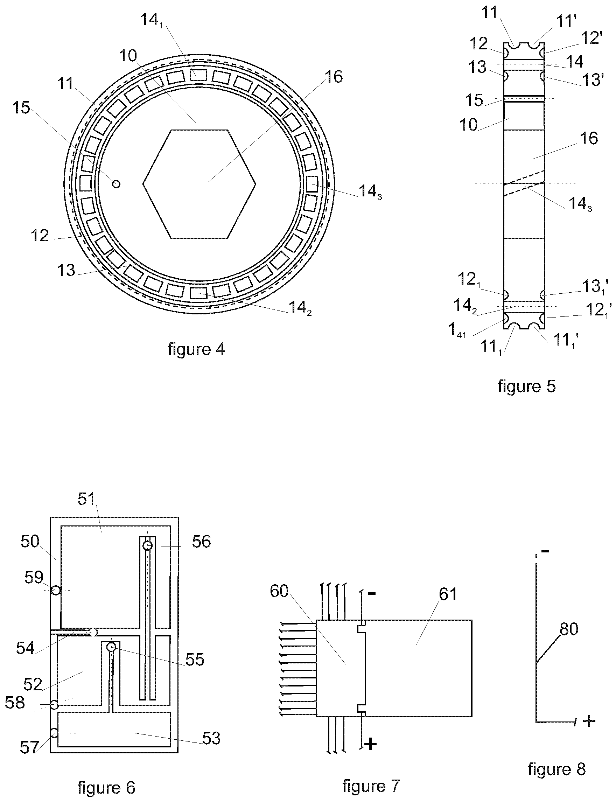

Figure 5 is the profile of the drive rotor in which the designations of the previous figure are repeated, but particularizing here as follows:
The 11 sign designates what we know as the injection motor bearing channel.

The 11' does so with what is known as the suction motor bearing channel.

With the anagrams 12 and 12₁, the upper and lower slopes of the main injection motor joint channel are respectively identified.

With the anagrams 13 and 13, the upper and lower slopes of the minor injection motor joint channel.

With the anagrams 12' and 12₁' the upper and lower slopes of the major suction drive joint channel are respectively seen.

With the anagrams 13' and 13₁' the upper and lower slopes of the minor suction drive joint channel are respectively seen.

Figure 6 shows the profile of a rigid, compact element resistant to pressure and temperature marked with the number 50; We know it as a vacuum cleaner and in it (50) the following are opened:
Under logo 51, a vacuum tank.

Designated as 52, a tank of liquid water, which always contains a certain amount of said element.

The number 53 indicates the exhaust tank.

Number 57 details the spherical hole that connects the exhaust tank (53) with the outside, which we call the remnant duct.

The spherical hole that constitutes the suction conduit is designated with the number 59 and opens to the vacuum tank (51) to the outside.

The vacuum tank (51) and the liquid water tank (52) communicate with each other through the spherical opening, which we know as the purge outlet, marked as 54; which (54) also opens to the outside through a cylindrical hole.

In a cylinder, which is an integral part of the suction body (50) and rises within the liquid water tank (52), a conduit of the same geometry opens with a spherical opening near its upper end; channel, which connects the latter (52) with the exhaust tank (53) and which we call the pressure connection designated with the number 55.

Called the spray conduit and with designation 56, a cylindrical channel appears that has an open spherical opening near its upper end; The same (56) is attached to a cylinder that, being an integral part of the suction body (50), ascends into the vacuum tank (51) and descends into the liquid water tank (52), communicating both (51 and 52).

Under logo 58 we see the spherical drain conduit, which opens the liquid water tank (52) to the outside.
Figure 7 represents the partial profile view of the electrical circuit installed in the present system since the figure only includes, with designation 61, an electric battery represented with the signs + and - and, under number 60, an electronic digital control which we call control; This (60) is connected to this (61) and to all the electrical components that make up the system by means of separate circuits that are sectioned here and will be detailed below.

Figure 8 shows the profile of a section of the electrical ignition circuit, which we call the spark plug, shown as 80.

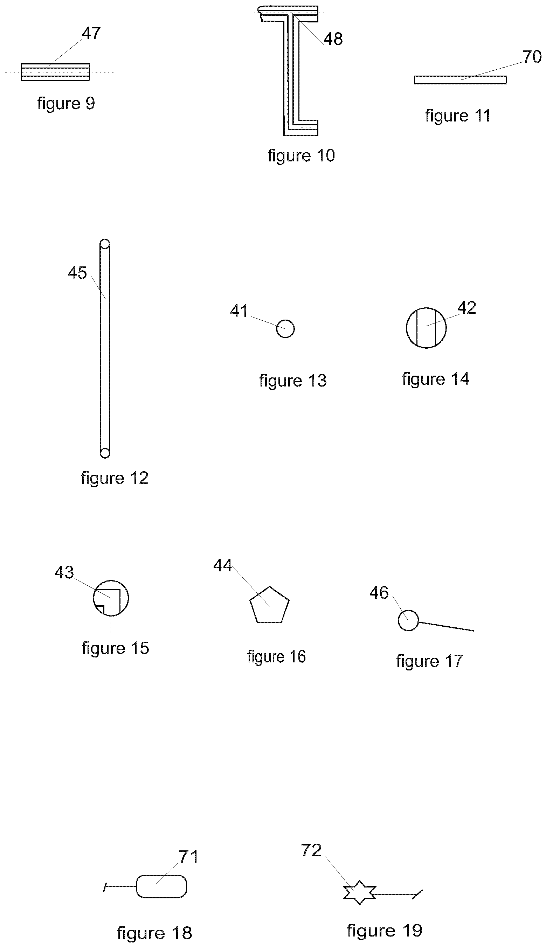

Figure 9 shows the longitudinal section of a dense conduit, resistant to pressure and temperature, capable of radiating this towards the surrounding medium and which can be either rigid or flexible at will, which we call the injector under designation 47.

Figure 10 shows the longitudinal section of a tee-shaped duct, dense, resistant to pressure and temperature that can be either rigid or flexible at will, which we call exhaust under designation 48.

Figure 11 describes a screw that, here under sign 70, will be known as a link.

Figure 12 is the diametral cut of an O-ring generally designated with the logo 45 since there will be different diameters as will be detailed.

Figure 13 represents the side view of a rigid sphere polished on its surface, with the same diameter as all the bearing grooves present in the invention, which under the name bearing is designated with the number 41.

Figure 14 shows with sign 42 the diametral cut of a rigid sphere polished on its surface, opened diametrically by a straight cylindrical conduit of a certain radius; It is a rotary closing solenoid valve that we will generally know as management valve.

Figure 15 specifies with sign 43 the diametral cut of a rigid sphere polished on its surface; Its body is opened diametrically by a square cylindrical conduit of a certain radius; It is a rotary closure solenoid valve that we will generally know as a purge management valve.

Figure 16 represents, with the number 44, the profile of a manometer.

Figure 17, with the sign 46, shows the profile of an electronic level that incorporates a float attached to a rod.

A photoelectric sensor is drawn in figure 18 under symbol 71; It (71) is connected to the electrical circuit, here present in a section, which connects it to the control (60).

In figure 19 a light appears, which we call under designation 72; It (72) is connected to the electrical circuit, here present in a section, which connects it to the control (60).

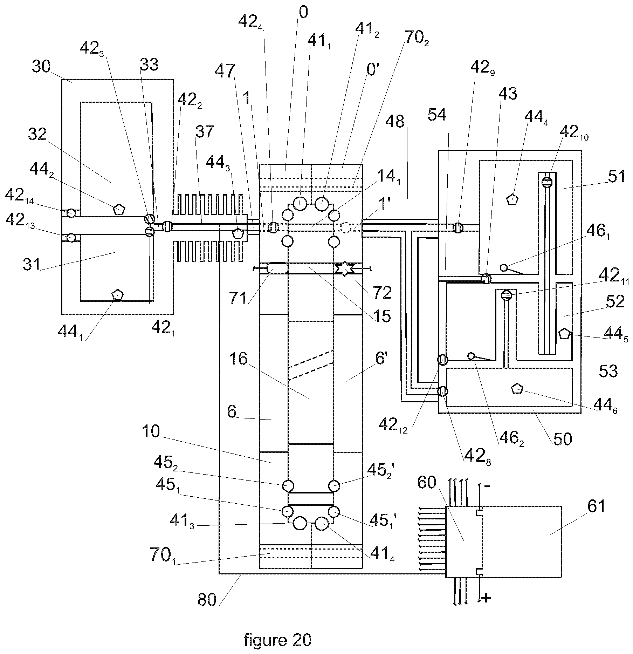

Figure 20 shows the assembly of all the system components detailed so far.

Thus, two casings, which we characterize respectively in their name as injection, with designation 0, and suction with sign 0', are seen coupled one (0) to the other (0') by means of the threading in the respective hooks of respective ties, under respective designation (71₁ and 71₂), here visible in hidden.

The injection passage, carried out to the injection casing (0), has the designation 1; while, 1', shows us the suction open in the suction (0').

The respective sinuses (9) of both casings (0 and 0') contain the drive rotor (10), of which its power take-off (16) is detailed, a compartment for the motor turbine 14, and the drive counter (15).

The symbols seen so far are repeated, with the exception that the different parts repeated in the same, that is: bearings, pressure gauges, solenoid valves, levels, O-rings and conduits are noted by the addition of a subscript number, and quotes in your case, as follows:
41₁ and 41₃ represent spheres that make up the collapsing series of bearings located in the injection motor bearing channel (11).
41₂ and 41₄ represent separate spheres that make up the filling series of bearings located in the evacuation drive bearing channel (11').
44, represents the pressure gauge of the oxygen tank (31).
44₂ points to the fuel tank pressure gauge (32).
44₃ indicates the pressure gauge located in the combustion chamber (37).
44₄ represents the vacuum manometer (51).
44₅ points to the pressure gauge of the liquid water tank (52).
446 indicates the exhaust pressure gauge (53).
46, represents the level of the vacuum tank (51).
46₂ points to the level of the liquid water tank (52).
42₁ represents the solenoid valve installed in the upper duct (35) which we call oxygen management.
42₂ indicates the solenoid valve installed in the spherical opening of the lower duct (36), which we call fuel management.
42₃ indicates the solenoid valve installed in the spherical opening of the intermediate duct (37) and we call it intermediate management.
42₄ represents the solenoid valve installed in the injection duct (38) and is called the injection management valve.
42₈ indicates the solenoid valve installed in the spherical opening of the carryover duct (57), which we know as the carryover management valve.
42₉ indicates the solenoid valve installed in the spherical opening of the suction duct (59) called the suction management solenoid valve.
42₁₀ represents the solenoid valve installed in the spherical opening of the spray conduit (56) called spray management.
421₁ indicates the solenoid valve installed in the spherical opening of the impulse duct (55) known as the impulse management valve.
4212 presents the solenoid valve installed in the spherical opening of the drain conduit (58) known as the drain management valve.
421₃ indicates the solenoid valve installed in the oxygen loading passage (39) known as the oxygen loading solenoid valve.
421₄ indicates the solenoid valve installed in the fuel charging passage (40) known as the fuel charging solenoid valve.
45₁ indicates the lower slope of the larger injection joint.
45₂ indicates the smaller injection joint on the lower side.
45₁' indicates the lower slope of the major suction joint.
45₂' indicates the lower slope of the smaller suction joint.

The sign 43 indicates the solenoid valve, called purge, installed in the purge pipe (54).

The battery (61) maintains electrical communication with the control (60), which shows a series of sections of electrical circuits coming out of it (60), which connect, each one of them in particular with a solenoid valve (42n), level ( 46n), pressure gauge ((44n) or spark plug (80) either receiving information from them or managing their action.

In the figure we can see the sealed connection of the impeller (30) with the injector duct (47) that connects it sealed to the injection casing (0) of the driving element.

Next, the drive rotor (10) is arranged, which is channeled into the core (9) of it (0) by means of a series of bearings (41₁-41₃).

A second series of bearings (41₂-41₄) guide the drive rotor (10) within the suction casing (0').

In the confrontation of the injection casing (0) and drive rotor (10) the following are faced:
The major injection static joint channel (71) with the major injection motor joint channel (12), in whose opening the major injection joint (45₁) is inserted.

The minor injection static joint channel (72) with the minor injection motor joint channel (13), in whose opening the major injection joint (45₂) is inserted.

When the suction casing (0') and drive rotor (10) confront each other:
The major suction static joint channel (71') with the major suction driving joint channel (12'), in whose opening the major suction joint (45₁') is inserted.

The minor suction static joint channel (72') with the minor suction motor joint channel (13'), in whose opening the minor suction joint (452') is inserted.

In this illustration, the watertight connection of the suction casing (0') to the exhaust duct (48) is also described, which (48) communicates doubly with the aspirator (50) maintaining tightness in its connections.

Thus the system works as follows:
First, the oxygen (31) and fuel (32) tanks are filled by connecting to their respective oxygen (39) and fuel (40) loading passages from respective supply sources, which are filled at the load pressure, maximum, under direction of the control (60) that carries out the opening and closing of the respective oxygen supply electro valves (42₁₃) and fuel (42₁₄), in order to achieve said objective.

After that, at the order of the user of the system over the control (60), it (60) initiates two repetitive procedures for the duration of the aforementioned command:
a) The explosion of the fuel, operated by means of the injection into the combustion chamber (34) from the oxygen tank (31) of such gas and from the fuel tank (32), given the already mentioned nutritional discretion of a quantity optional fuel; supplies that occur by opening the oxygen management solenoid valves (42₁) and fuel (42₂), after which the control (60) closes both (42₁) and (42₂) once the desired quantities are reached.

The precision of said gaseous supplies is determined thanks to the analysis in the control (60) of the variation of pressures existing in the oxygen tank (31) and the fuel tank (32) recorded by their respective manometers (44₁) and (44₂).

Next, the control (60) sends an electrical pulse to the spark plug (80) that ignites the aforementioned gas mixture; which produces, in the event of a hydrogen explosion, pure water vapor and, if it is hydrogenated hydrocarbon, also said vapor with a minor addition of carbon monoxide and carbon dioxide.

After this, the control (60) opens the intermediate management solenoid valve (42₃) so that the product of the previous reaction flows into the expansion chamber (33), where the pressure gauge (44₃) of said chamber (33) communicates to the control (60) the rise in pressure reached, with which it (60) closes the intermediate management solenoid valve (42₃) once the density of the gas housed in the combustion chamber (34) has dropped to the appropriate level for its gas re-feeding by repetition of the supply cycle detailed above, which results in starting the driving part of the engine that concerns us here.

The repetition of explosions such as the one mentioned increases the pressure in the expansion chamber (33), which registers the control (60) and returns such information to the driver of the vehicle carrying the device described here.

At the will of said information receiver, and by his order given to the control (60), the injection management solenoid valve (42₄) is opened during the required engine actuation time, to a greater or lesser extent, depending on whether it is requested more or less. less power, passing the product of the explosions through the injection duct (47), from which it impacts the blade of the engine turbine (28) that is located in its path, thus exerting its pressure on the contact surface between the two, creating a depression on the opposite face of said vane, which gives powerful rotation to the drive rotor (20), subsequently dividing the water vapor its way into the suction conduit (48) towards the tank. vacuum (51) and exhaust (53); traffic that is regulated by the control based on the values offered by the vacuum (44₄) and exhaust (44₆) pressure gauges operating the suction (42s) and carryover (42₈) management solenoid valves.

b) The precipitation of the water vapor already located in the vacuum tank (53), with the dragging of the other gases present there in solution, is produced by the nebulous injection of liquid water from its tank (52) inside of that (53); action that occurs by opening by control (60) of the spray management electro-valve (42₁₀), after having increased the pressure in the liquid water tank (52) by inserting steam from the tank (52) into it (52). exhaust (53), which occurs by punctual opening of the drive management solenoid valve (4211) by the control (60).

Once the water has been poured into the vacuum tank (53), it is deposited inside the purge valve (43), which is, as shown in figure 20, making room for the arriving water but, due to its absence, communication of this liquid with any other space, the level of the vacuum tank (461) communicates to the control (60) the overflow of the capacity of said valve (43), and this (60) is responsible for transferring that liquid to the tank of liquid water (52) ordering it (43) to rotate 270 degrees hourly, with which the water falls into the liquid water tank (52) by acquiring atmospheric air from its other end, now open to the outside through the purge conduit (54) after which the purge valve (43) returns to its original position by order of the control (60).

The level of the liquid water tank (462) indicates the amount of water that said container (52) occupies, data that is communicated to the control (60) in order to empty it when exceeding a certain volume, which will be carried out by opening the valve. drain management valve (4212) towards the outside to close it after the water level drops to the amount desired by the driver.

Procedures that are repeated whenever there is an order for engine action in the control (60), for which purpose the drive rotor (20) rotates due to the depression gradient existing on both sides of its engine turbine (28), giving up its power. to either a wheel, propeller or combination of the two.

The oxygen (31) and fuel (32) tanks can be refueled at discretion by repeating the procedure already detailed.

It is not considered necessary to make this description more extensive so that any expert in the field understands the scope of the invention and the advantages derived from it.

The terms in which this report has been written should always be taken in a broad and non-limiting sense.

The materials, shape and arrangement of the elements will be susceptible to variation, as long as this does not imply an alteration of the essential characteristics of the invention presented here in accordance with the following

## Claims

1. A turbine driven by confrontation of explosions of oxygen and hydrogen or any hydrogenated hydrocarbon under pressure and vacuum by aqueous precipitation of the resulting water vapor comprising the following components:
◆ An electric battery (61).
◆ An electronic control (60).
◆ A spark plug (80).
◆ An impeller (30) consisting of:
∘ An oxygen tank (31).
∘ The oxygen charging solenoid valve (42₁₃).
∘ A fuel tank (3₂).
∘ The fuel charging solenoid valve (42₁₄).
∘ A mixing chamber (33).
∘ A combustion chamber (37) with high cooling capacity.
∘ The oxygen management solenoid valve (42₁).
∘ The fuel management solenoid valve (42₂).
∘ The intermediate management solenoid valve (42₃).
∘ An oxygen tank pressure gauge (44₁).
∘ A fuel tank pressure gauge (44₂).
∘ A combustion chamber pressure gauge (44₃).
■ An injector line (47).
■ An injection housing (0), in which the injection management solenoid valve (42₄) is installed.
■ A suction housing (0').
■ A driving rotor (10), on the side of which the injection (11 and 11₁) and suction (11' and 11_{1'}) driving bearing channels open.
Communicating coaxially its bases it is crossed by a power intake (16).
Skewed to said bases, there is a concentric series of spans (14₁, 14₂ and 14₃) whose separating blades constitute the motor turbine therein.
On one of the bases of the driving rotor (10) are arranged the channels of the major injection driving seal (12 and 121) and the minor injection driving seal (13 and 131); on the other, those of the major suction driving seal (12' and 12₁') and the minor suction driving seal (13' and 13_{1'}).
The driving rotor (10) has on its side the injection driving bearing channel (11) and the suction driving bearing channel (11').
■ The required number of bearings (41₁, 41₂, 41₃ and 41₄) to fill the injection drive bearing race (11) and suction drive bearing race (11').
■ A major injection seal (45₂).A minor injection seal (451).A major suction seal (45₁').
■ A minor suction joint (45₂').
■ An exhaust duct (48).
■ A vacuum cleaner (50) comprising:
◆ A vacuum reservoir (51).
◆ A liquid water reservoir (52).
◆ n exhaust tank (53).
◆ A backwater management solenoid valve (42₈).
◆ A suction management solenoid valve (42₉).
◆ A spray management solenoid valve (42₁₀).
◆ A drive management solenoid valve (42₁₁).
◆ A drain management solenoid valve (42₁₂).
◆ A bleed management solenoid valve (43).
◆ A vacuum pressure gauge (44₄).
◆ A liquid water tank pressure gauge (44₅).
◆ An exhaust pressure gauge (446).A vacuum reservoir level (46₁).
◆ A liquid water reservoir level (46₂).
